# EUROPEAN PATENT APPLICATION

(11) **EP 3 842 137 A1**
(43) Date of publication of application: **30.06.2021**
(21) Application number: 19853010.7
(22) Date of filing: 21.08.2019
(51) Int. Cl.: B01J 20/20, B01J 20/28, B01J 20/32, B01D 59/26

(54) **GRAPHEME OXIDE ADSORBENT AND METHOD FOR PRODUCING SAME**

(30) Priority: 23.08.2018 JP 2018156727
(71) Applicant: Shinshu University, Matsumoto-shi, Nagano 390-8621 (JP); Kotobuki Holdings Co., Ltd., Kitakyushu-shi, Fukuoka 802-8540 (JP)
(72) Inventor: KANEKO Katsumi, Nagano-shi, Nagano 380-8553 (JP); TAKAGI Toshio, Kitakyushu-shi, Fukuoka 802-0042 (JP); SHIMIZU Yasushi, Kitakyushu-shi, Fukuoka 802-0836 (JP); MURATA Katsuyuki, Kitakyushu-shi, Fukuoka 802-0836 (JP)
(74) Representative: Parker, Andrew James
(86) International application number: PCT/JP2019/032695
(87) International publication number: WO 2020/040218

(57) **Abstract**

An aspect of the present disclosure provides a graphene oxide adsorbent having a plurality of layered graphene oxides overlapping each other, an interlayer material disposed between the plurality of layered graphene oxides, and pores composed of the plurality of layered graphene oxides and the interlayer material.

## Description

### Technical Field

The present disclosure relates to a graphene oxide adsorbent and a method for producing the same. The present disclosure relates to a light water adsorbent to be mainly used in separation between light water and heavy water, or the like.

### Background Art

As a method for separating heavy water (D₂O) and semi-heavy water (HDO) from light water (H₂O), a separation method using, as an adsorbent, a carbon-based material such as activated carbon having a difference in adsorption amount between light water and heavy water has been known (Patent Literature 1).

For example, when water vapor containing light water and heavy water is supplied to the adsorbent as mentioned above, one of light water and heavy water is adsorbed more to the adsorbent, the other one remains more in water vapor in air, and thus light water and heavy water can be separated from each other.

Since the activated carbon has a large surface area, the adsorption amount of water vapor is also 30 to 50 mmol/g that is large, and a large amount of water can be adsorbed. However, generally, the maximum adsorption amounts of water vapors of light water and heavy water with respect to the activated carbon are almost the same as each other. For this reason, in the method for separating heavy water from light water by using activated carbon, separation efficiency is poor, and in order to obtain light water or heavy water, it is necessary to repeat adsorption of water vapor.

As another adsorbent, use of a graphene oxide (hereinafter, referred to as GO) has been studied. As a method for producing a GO, a Hummers' method has been known. In this method, graphite is chemically oxidized, layered graphene oxides are exfoliated, and thereby a dispersed aqueous solution is obtained. This method is a main method as a method for preparing a dispersed aqueous solution of layered graphene oxides. A dispersed aqueous solution obtained in this way is generally used for producing a GO thin film by casting or spin coating and then drying the dispersed aqueous solution. On the other hand, in the case of using the GO as an adsorbent, a method in which the dispersed aqueous solution is subjected to ultracentrifugal separation and the precipitated part is formed into powder by drying by heating or the like is used.

The GO prepared by the Hummers' method is generally obtained in the form of a dispersion. As for an adsorbent obtained by simply drying the dispersion, the adsorption amount of water vapor is less than 10 mmol/g, and thus the amount of water vapor that can be separated at once is small. For this reason, it cannot be said that the adsorbent obtained by the aforementioned method is sufficient as an adsorbent to be used in the method for separating light water or heavy water in the industrial scale. Furthermore, the molar number of light water and the molar number of heavy water that are adsorbed by the aforementioned adsorbent are the same as each other. Therefore, a difference in adsorption amount between light water and heavy water is almost the same as a difference in molecular weight therebetween, and also from the viewpoint of separation efficiency, there is a room for improvement in the aforementioned adsorbent.

### Citation List

### Patent Literature

Patent Literature 1: International Publication WO 2016/031896

### Summary of Invention

### Technical Problem

An object of the present disclosure is to provide a graphene oxide adsorbent having a large maximum adsorption amount of an adsorption target material. Another object of the present disclosure is to provide a method for producing the graphene oxide adsorbent as mentioned above.

### Solution to Problem

An aspect of the present disclosure provides a graphene oxide adsorbent having a plurality of layered graphene oxides overlapping each other, an interlayer material disposed between the plurality of layered graphene oxides, and pores composed of the plurality of layered graphene oxides and the interlayer material.

The graphene oxide adsorbent partially has an interlayer material between the layers of the layered graphene oxides, and thereby can adsorb a gas in exposure surfaces of both surfaces of the layered graphene oxides. That is, an effective surface area of the graphene oxide adsorbent can be increased, and an adsorption amount of an adsorption target material can be increased.

The interlayer material may contain at least one selected from the group consisting of water, methanol, ethanol, acetone, tetrahydrofuran, dimethylformamide, acetonitrile, dimethylsulfoxide, and hexane. The interlayer material contains the aforementioned compound, and thereby a void between the layered graphene oxides can be more easily controlled. Furthermore, in a case where the interlayer material contains a compound selected from the aforementioned group, a distance between layered graphene oxides constituting a graphene oxide adsorbent to be obtained may be an optimal interlayer distance to adsorb a gas containing such a compound. By such an action, adsorption specific for such a compound is exhibited. In other words, by selecting a compound constituting the interlayer material according to a compound to be adsorbed, selectivity with respect to such a compound can be more improved.

An interlayer distance between the layered graphene oxides may be 0.335 to 2.50 nm. When the interlayer distance between the layered graphene oxides is set within the above-described range, a sufficient void can be provided between the layered graphene oxides while selectivity for an adsorption target material is maintained, and thus the adsorption amount of the adsorption target material can be more increased.

The aforementioned graphene oxide adsorbent may be used for adsorbing the same material as the interlayer material. In a case where the interlayer material in the aforementioned graphene oxide adsorbent and a material to be adsorbed by using the graphene oxide adsorbent (adsorption target material) are the same as each other, the distance between the layered graphene oxides in the graphene oxide adsorbent has a void more suitable for the adsorption target material, and thus both the adsorption amount and the selectivity can be achieved in a high level.

Another aspect of the present disclosure provides a method for separating a material, the method including bringing a gas containing a material serving as an adsorption target and other materials into contact with the aforementioned graphene oxide adsorbent to adsorb the material serving as an adsorption target.

Since the method for separating a material uses the aforementioned graphene oxide adsorbent, the adsorption amount of an adsorption target material can be increased, and separation of the material can be efficiently performed.

Still another aspect of the present disclosure provides a method for producing a graphene oxide adsorbent, the method including freeze-drying a graphene oxide dispersion, which contains a solvent containing a material serving as an interlayer material and layered graphene oxides, to decrease a content of the solvent, thereby obtaining a graphene oxide adsorbent.

The method for producing a graphene oxide adsorbent can prepare a graphene oxide adsorbent while the interlayer material is maintained between the layered graphene oxides, by freeze-drying in a state where the material serving as the interlayer material is contained between the layered graphene oxides. The graphene oxide adsorbent to be obtained partially has the interlayer material between the layers of the layered graphene oxides, and thereby can adsorb a gas in exposure surfaces of both surfaces of the layered graphene oxides. That is, according to the method for producing a graphene oxide adsorbent, a graphene oxide adsorbent having a large effective surface area can be produced, and the graphene oxide adsorbent to be obtained has an excellent maximum adsorption amount with respect to an adsorption target material.

The interlayer material may contain at least one selected from the group consisting of water, methanol, ethanol, acetone, tetrahydrofuran, dimethylformamide, acetonitrile, dimethylsulfoxide, and hexane.

The content of the solvent may be decreased so that an interlayer distance between the layered graphene oxides becomes 0.335 to 2.50 nm.

### Advantageous Effects of Invention

According to the present disclosure, it is possible to provide a graphene oxide adsorbent having a large maximum adsorption amount of an adsorption target material. According to the present disclosure, it is also possible to provide a method for producing the graphene oxide adsorbent as mentioned above.

### Brief Description of Drawings

FIG. 1 is a schematic cross-sectional view illustrating an example of a graphene oxide adsorbent.
FIG. 2 is a schematic diagram for describing an example of a method for producing a graphene oxide adsorbent.
FIG. 3 shows adsorption isotherms showing adsorption amounts of light water and heavy water in the graphene oxide adsorbent.
FIG. 4 shows adsorption isotherms showing adsorption amounts of light water and heavy water after the graphene oxide adsorbent is heated at 80°C to be deactivated.
FIG. 5 is a graph showing thermogravimetric analysis of the graphene oxide adsorbent.
FIG. 6 is a schematic diagram for describing a conventional method for producing a graphene oxide adsorbent by a Modified Hummers' method.

### Description of Embodiments

Hereinafter, embodiments of the present disclosure will be described with reference to the drawings as appropriate. However, the following embodiments are examples for describing the present disclosure and it is not intended to limit the present disclosure to the following content.

A graphene oxide in the present specification is a material in which an oxygen-containing functional group is bonded to a monomolecular layer of graphite. In the present specification, for convenience sake, the graphene oxide is referred to as a layered graphene oxide in some cases. Examples of the oxygen-containing functional group include a hydroxyl group, a carbonyl group, a carboxy group, and an epoxy group.

An embodiment of a graphene oxide adsorbent has a plurality of layered graphene oxides overlapping each other, an interlayer material disposed between the plurality of layered graphene oxides, and pores composed of the plurality of layered graphene oxides and the interlayer material.

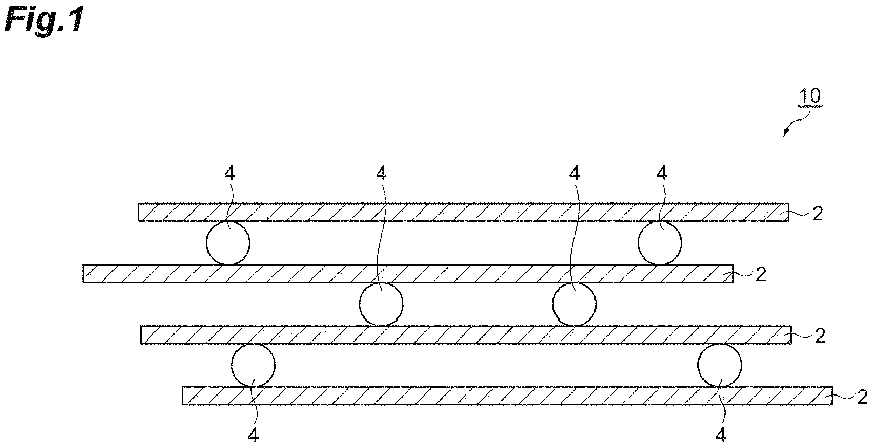

FIG. 1 is a schematic cross-sectional view illustrating an example of a graphene oxide adsorbent. A graphene oxide adsorbent 10 has a plurality of layered graphene oxides 2 and an interlayer material 4 disposed between the layered graphene oxides. The graphene oxide adsorbent 10 has pores composed of the layered graphene oxides 2 and the interlayer material 4 mentioned above. By providing the pores, the graphene oxide adsorbent 10 can adsorb a gas in exposure surfaces of both surfaces of the layered graphene oxides 2. Furthermore, into the pores formed by the interlayer material, for example, the same type of compound as the interlayer material and a compound having a molecular size equal to that of the interlayer material (for example, a compound having the same diameter) are likely to enter, and thus the graphene oxide adsorbent is suitable for an adsorbent using these compounds as adsorption target materials.

In other words, the graphene oxide adsorbent is a graphene oxide adsorbent obtained by stacking graphene oxides and being used in adsorption of a material, and it is also possible that the graphene oxide adsorbent is characterized by having an interlayer adsorption material forming pores into which an adsorption target material enters by maintaining a predetermined distance between layers of the graphene oxides. In the graphene oxide adsorbent, a predetermined distance between layers of the graphene oxides is maintained by the interlayer material, and thereby pores into which an adsorption target material enters are formed. The pores become spaces into which an adsorption target material enters, and thus the adsorption performance of the graphene oxide adsorbent can be largely improved.

The interlayer material 4 may be composed of single molecule and may contain a cluster composed of a plurality of molecules. In a case where the interlayer material 4 is composed of single molecule, the selectivity of an adsorption target material can be more improved. Furthermore, in a case where the interlayer material 4 contains a cluster composed of a plurality of molecules, the interlayer distance between the layered graphene oxides 2 tends to widen, and thus the maximum adsorption amount of an adsorption target material can be more improved.

The interlayer material 4 may contain, for example, at least one selected from the group consisting of water, methanol, ethanol, acetone, tetrahydrofuran (THF), dimethylformamide (DMF), acetonitrile (MeCN), dimethylsulfoxide (DMSO), and hexane. The interlayer material may be any one of water, methanol, ethanol, acetone, THF, DMF, MeCN, DMSO, and hexane.

Since the interlayer distance between the layered graphene oxides can be adjusted by the molecular diameter of the interlayer material or the diameter of the cluster, the selectivity of an adsorption material and the adsorption amount thereof can be controlled. Furthermore, since the selected interlayer material can provide an optimal interlayer distance for the interlayer material itself to adsorb, the graphene oxide adsorbent can exhibit an adsorption amount specific for the same material as the interlayer material that is a constituent element thereof. Thereby, the selectivity of an adsorption target material and other materials can be improved.

The content of the interlayer material 4 in the graphene oxide adsorbent 10 may be, for example, 1% by mass or more based on the graphene oxide adsorbent 10. When the lower limit value of the content of the interlayer material 4 is within the above-described range, the interlayer material 4 sufficiently remains between the layered graphene oxides, and the maximum adsorption amount of an adsorption target material with respect to the graphene oxide adsorbent 10 can be more improved. The content of the interlayer material 4 in the graphene oxide adsorbent 10 may be, for example, 45% by mass or less based on the graphene oxide adsorbent 10. When the upper limit value of the content of the interlayer material 4 is within the above-described range, a decrease in pore volume between the layered graphene oxides can be suppressed. The content of the interlayer material 4 in the graphene oxide adsorbent 10 may be adjusted within the aforementioned range, and may be, for example, 1 to 45% by mass based on the graphene oxide adsorbent 10.

In a case where the interlayer material 4 is water, the content of water in the graphene oxide adsorbent 10 may be, for example, 1% by mass or more and 20% by mass or less based on the graphene oxide adsorbent 10. The content of the water in the graphene oxide adsorbent 10 may be adjusted within the aforementioned range, and may be, for example, 1 to 20% by mass based on the graphene oxide adsorbent 10.

Furthermore, in a case where the interlayer material 4 is ethanol, the content of ethanol in the graphene oxide adsorbent 10 may be, for example, 1.5% by mass or more and 40% by mass or less based on the graphene oxide adsorbent 10. The content of the ethanol in the graphene oxide adsorbent 10 may be adjusted within the aforementioned range, and may be, for example, 1.5 to 40% by mass based on the graphene oxide adsorbent 10.

Further, in a case where the interlayer material 4 is acetone, the content of acetone in the graphene oxide adsorbent 10 may be, for example, 3% by mass or more and 45% by mass or less based on the graphene oxide adsorbent 10. The content of the acetone in the graphene oxide adsorbent 10 may be adjusted within the aforementioned range, and may be, for example, 3 to 45% by mass based on the graphene oxide adsorbent 10.

In a case where the interlayer adsorption material contains the aforementioned compound, since the selected interlayer material can provide an optimal interlayer distance to adsorb the selected compound mentioned above, a graphene oxide adsorbent to be obtained exhibits adsorption specific for the same material as the interlayer material. Thereby, the selectivity of an adsorption target material and other materials can be improved. That is, the graphene oxide adsorbent can be suitably used for adsorbing the same material as the interlayer material.

The interlayer distance between the layered graphene oxides may be, for example, 0.335 to 2.50 nm. Since the interlayer distance between the graphene oxides by interposition of the interlayer material is 0.335 to 2.50 nm in terms of a distance between carbon atom centers so that a large pore volume can be provided, a large amount of an adsorption target material can be adsorbed while the selectivity of the adsorption target material is increased. The distance is not a distance between surfaces of the layered graphene oxides but is a distance between atom centers of carbon atoms constituting the layered graphene oxides facing each other, and the distance is a value measured by X-ray analysis.

In a case where the interlayer distance between the layered graphene oxides is 0.335 to 2.50 nm, the graphene oxide adsorbent 10 is suitable as an adsorbent with respect to light water. When the interlayer distance is 0.335 nm or more, the adsorption amount of light water can be increased. Furthermore, when the interlayer distance is 2.50 nm or less, an increase in adsorption amount of heavy water or the like that is not an adsorption target material can be suppressed.

The aforementioned graphene oxide adsorbent can be produced, for example, by a production method as described below. An embodiment of a method for producing a graphene oxide adsorbent includes freeze-drying a graphene oxide dispersion, which contains a solvent containing a material serving as an interlayer material and layered graphene oxides, to decrease a content of the solvent, thereby obtaining a graphene oxide adsorbent.

As the graphene oxide dispersion, which contains a solvent containing a material serving as an interlayer material and layered graphene oxides, a dispersion prepared in advance may be used, and a dispersion may be separately prepared. That is, the method for producing a graphene oxide adsorbent may further include dispersing graphene oxides in the solvent containing a material serving as an interlayer material.

The solvent contained in the dispersion contains a material serving as an interlayer material in the graphene oxide adsorbent. As the material serving as the interlayer material, at least one selected from the group consisting of water, methanol, ethanol, acetone, tetrahydrofuran, dimethylformamide, acetonitrile, dimethylsulfoxide, and hexane, and the like are exemplified. The solvent contains the aforementioned compound, and thereby pores can be more reliably and easily formed between layers of graphene oxides.

The dispersion may further contain other materials in addition to the solvent containing a material serving as an interlayer material and the layered graphene oxides. The dispersion preferably contains only the solvent containing a material serving as an interlayer material and the layered graphene oxides.

In the method for producing a graphene oxide adsorbent, by employing the freeze-drying method, the content of the solvent can be reduced in a state where the interlayer material adequately remains between the layered graphene oxides. Herein, the freeze-drying is a method of drying the solvent after freezing the solvent, and specifically, means that the solvent is dried at a temperature equal to or lower than a freezing point of a material serving as the interlayer material. The freeze-drying is generally performed under reduced pressure. In the case of performing the freeze-drying at a temperature below a freezing point, from the viewpoint of easily performing drying, it is preferable to perform vacuum drying.

In a case where the solvent contains light water (water), the freeze-drying can be performed at 0°C or lower that is a freezing point of water at normal pressures. In this case, in order to more reliably perform freezing in a state of vacuuming, the temperature may be, for example, -5°C or lower, -10°C or lower, -30°C or lower, or -40°C or lower. For example, in a case where the freeze-drying is performed under a condition of -40°C or lower, drying can be performed more quickly.

The temperature and time of the freeze-drying can be adjusted according to a material serving as the interlayer material. For example, in a case where the solvent contains light water (water), it is desirable to perform heating and drying at lower than 100°C that is a boiling point of the light water. By adjusting the temperature of the freeze-drying in a case where the solvent contains light water within the above-described range, it is possible to avoid that light water serving as the interlayer material vaporizes to deactivate the graphene oxide adsorbent and the performance is lowered to the same degree as that of a conventional graphene oxide adsorbent. Furthermore, in a case where the solvent contains light water (water), for example, by adjusting the heating time to a short time even in the case of performing drying at a temperature equal to or higher than 60°C, it is possible to avoid that light water serving as the interlayer material vaporizes to deactivate the graphene oxide adsorbent and the performance is lowered to the same degree as that of a conventional graphene oxide adsorbent.

More specifically, the method is a method for producing a graphene oxide adsorbent having an interlayer adsorption material which maintains a predetermined distance between layers of graphene oxides, and is characterized by having a dispersing step of dispersing graphene oxides in a solvent serving as the interlayer material and a drying step of drying the graphene oxides dispersed in the solvent serving as the interlayer material at a temperature equal to or lower than a freezing point of the solvent serving as the interlayer material.

In a conventional intercalation method in which layered graphene oxides are stacked to form a solid product and then a specific material (intercalant) is caused to enter between layers, the type of intercalant is limited. For example, even in the case of an element or material of a metal, an acid, halogen, a halide of a metal, or the like, the element or material is easily intercalated by the conventional intercalation method, but it is difficult to intercalate a material other than the above-described element or material between the layered graphene oxides. Furthermore, if the element or material described above is tried to be introduced between layers by using the conventional intercalation method, generally, the intercalant is filled between the layers so that gaps such as pores are not formed. Therefore, the intercalation method is not necessarily useful as the method for producing an adsorbent, and a graphene oxide to be obtained is also not suitable for an adsorbent. Incidentally, in the conventional intercalation method, electrical charges move between graphite and the intercalant, and the material is used as a high conductive material.

On the other hand, the aforementioned method for producing a graphene oxide adsorbent can employ many materials as the interlayer material as mentioned above. Furthermore, the aforementioned method for producing a graphene oxide adsorbent can control the amount of the interlayer material between the layered graphene oxides by utilizing the freeze-drying. Therefore, the interlayer materials separate the layers of the layered graphene oxides from each other by the molecular size thereof or the size of the molecular cluster and connect the layers like columns to form pores, and voids into which an adsorption target material enters can be provided.

The graphene oxide adsorbent to be obtained by the aforementioned production method can be suitably used in a method for separating a material. An embodiment of the method for separating a material includes bringing a gas containing a material serving as an adsorption target and other materials into contact with the aforementioned graphene oxide adsorbent to adsorb the material serving as an adsorption target. Herein, it is desirable that the material is supplied in a gaseous state to the graphene oxide adsorbent.

Hereinbefore, some embodiments of the present disclosure have been described; however, the present disclosure is not limited to the above-described embodiments at all. Furthermore, the description contents of the aforementioned embodiments can be applied to each other.

### Examples

Hereinafter, the contents of the present disclosure will be described in more detail with reference to Examples and Comparative Examples. However, the present disclosure is not limited to the following Examples.

### (Example 1)

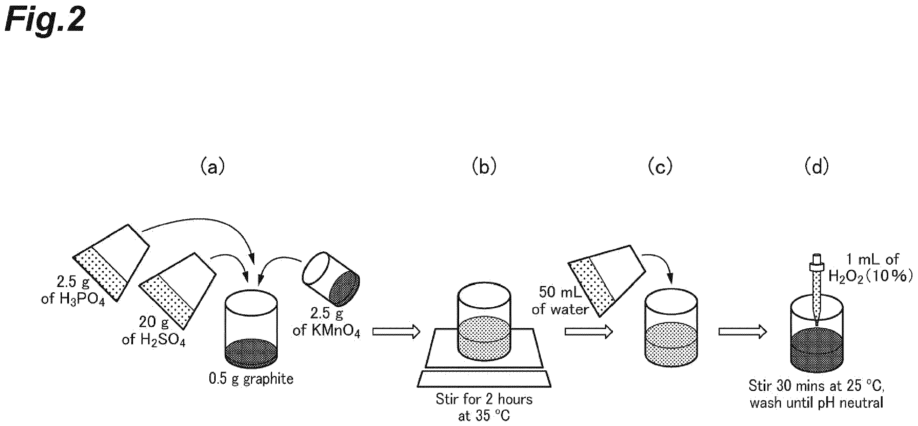

A graphene oxide adsorbent was produced by the method illustrated in FIG. 2. First, 0.5 g of graphite powder was weighed in a container, 2.5 g of a phosphoric acid aqueous solution (H₃PO₄ aqueous solution, concentration: 85% by mass), 20 g of concentrated sulfuric acid (H₂SO₄, concentration: 97% by mass), and 2.5 g of potassium permanganate (KMnO₄) powder were added thereto to prepare a mixed solution, and the mixed solution was stirred at 35°C for 2 hours. Next, 50 mL of water (H₂O) was added to the mixed solution and thoroughly stirred. Thereafter, 1 mL of a hydrogen peroxide solution (H₂O₂, concentration: 10% by mass) was added to the mixed solution and stirred at 25°C for 30 minutes. In this process, graphene layers of graphite were oxidized to generate a surface functional group, the further oxidized graphene layers were exfoliated from the graphite, and thereby a solution containing layered graphene oxides was prepared.

After the solution was washed with hydrochloric acid, washing with pure water was repeated until the pH became neutral to remove sulfuric acid, manganese, and the like, and thereby a solution containing layered graphene oxides and water serving as an interlayer material (GO solution) was obtained.

Next, the GO solution was freeze-dried. Specifically, first, a rectangular parallelepiped made of copper was installed in an insulating container and liquid nitrogen was put thereinto. The amount of the liquid nitrogen was adjusted so that the upper surface of the rectangular parallelepiped made of copper was at a height of about 1 cm from the liquid surface of the liquid nitrogen. A straw-shaped plastic tube having a diameter (inner diameter) of 5 mm and a length of 10 cm was stood up on the upper surface of the rectangular parallelepiped made of copper, the GO solution was poured inside the tube, and the GO solution in the tube was frozen. The frozen GO solution was extruded from the tube, put into a freeze-drying machine, and freeze-dried. The freeze-drying was performed by using a vacuum freeze dryer VFD-03 (manufactured by AS ONE Corporation) at -10°C over 12 hours while maintaining a degree of vacuum to 133 Pa. In this way, a solid graphene oxide adsorbent (GO adsorbent) was obtained.

### <Evaluation of separation performance of graphene oxide adsorbent>

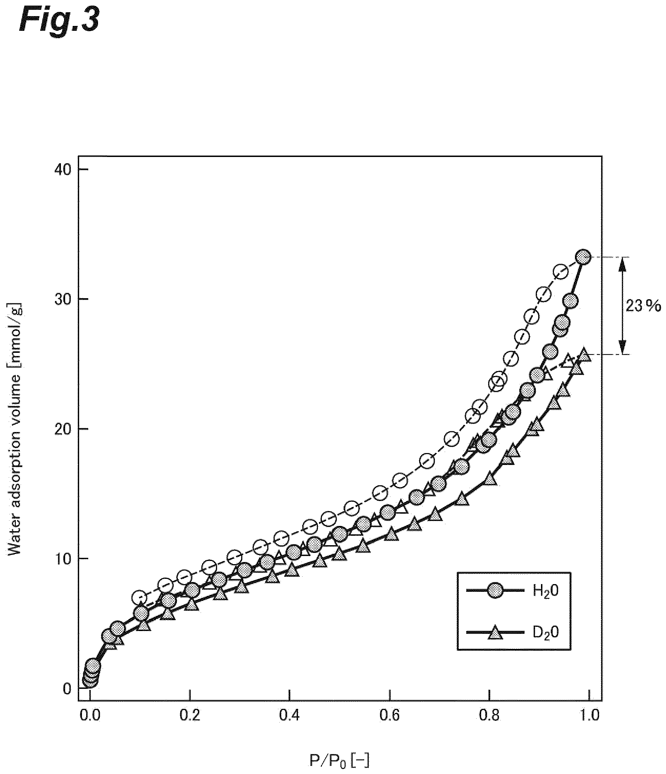

The adsorption performance of the obtained graphene oxide adsorbent with respect to light water and heavy water was evaluated. Results are shown in FIG. 3. FIG. 3 shows adsorption isotherms showing adsorption amounts of light water and heavy water in the graphene oxide adsorbent. The vertical axis of the adsorption isotherm indicates an adsorption amount of water (water adsorption volume [mmol/g]) and the horizontal axis indicates a pressure (P/Po [-]) of water vapor during adsorption equilibrium. In FIG. 3, the black circle (solid line) indicates an adsorption amount of light water during adsorption, the white circle (broken line) indicates an adsorption amount of light water during desorption, the black triangle (solid line) indicates an adsorption amount of heavy water during adsorption, and the white triangle (broken line) indicates an adsorption amount of heavy water during desorption.

As shown in FIG. 3, the GO adsorbent of Example 1 can selectively adsorb an adsorption target material more than a conventional GO adsorbent. That is, FIG. 3 shows that, when water vapor is supplied to the GO adsorbent to be adsorbed, in a water vapor adsorption amount during saturated adsorption, light water is adsorbed more by 23% than heavy water in terms of the molar ratio.

Furthermore, FIG. 3 shows that the GO adsorbent of Example 1 can adsorb an adsorption target material more than a conventional adsorbent per unit amount. Specifically, the adsorption amount of water vapor in a conventional adsorbent obtained by simply drying a graphene oxide dispersion prepared by a Hummers' method is less than 10 mmol/g; on the other hand, the adsorption amount of light water at a saturated vapor pressure of the GO adsorbent of Example 1 shown in FIG. 3 exceeds 30 mmol/g, and thus it can be confirmed that the adsorption amount is considerably improved from the conventional GO adsorbent.

Such properties of the GO adsorbent are considered to be derived from the fact that the GO adsorbent has the interlayer material between the layered graphene oxides. That is, since the interlayer materials separate the layers of the layered graphene oxides from each other by the molecular size thereof or the size of the molecular cluster and connect the layers like columns to maintain a predetermined distance between the layers and to form pores (gaps) in the GO adsorbent, it is considered that the above-described effects are obtained. In the GO adsorbent of Example 1, the light water slightly remaining after freeze-drying functions as the interlayer material.

The GO adsorbent of Example 1 uses general water as the solvent for the GO dispersion, but since 99% or more of water is light water, light water functions as the interlayer material. Therefore, as shown in FIG. 3, the adsorption amount of light water at a saturated vapor pressure was larger than the adsorption amount of heavy water. In order to obtain a graphene oxide adsorbent having more excellent selectivity of an adsorption material, light water having a higher purity may be used as the solvent. By doing so, light water equal to an interlayer adsorption material is likely to enter between layers of the GO, and both the adsorption amount of light water and the selectivity thereof can be improved.

### <Evaluation of stability of graphene oxide adsorbent>

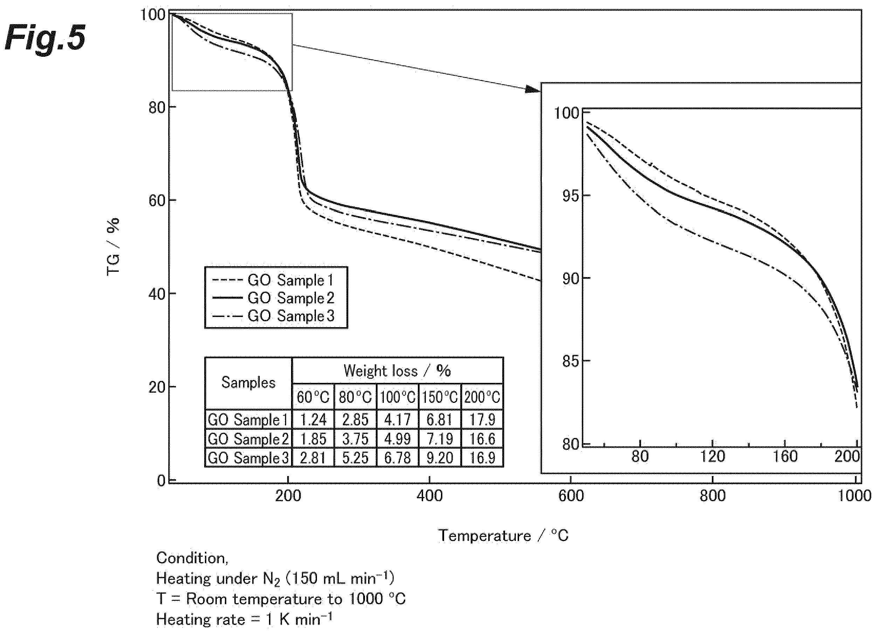

The thermogravimetric measurement was performed in order to check the stability of the GO adsorbent of Example 1. In the thermogravimetric measurement, the GO adsorbent was left to stand still, 150 mL of N₂ gas was supplied every minute, and the temperature of the system was increased from room temperature at 1 K every minute. The experiment was performed using three samples. Results are shown in FIG. 5.

FIG. 5 is a graph showing thermogravimetric analysis of the graphene oxide adsorbent. As shown in FIG. 5, during the GO adsorbent was heated to 0°C to 100°C, the mass was decreased at an average of about 5%. The reason for this is that water serving as an interlayer material vaporizes by heating to be separated. Water molecules adsorbed between the layers are in a more stable state than general water, by an intermolecular interaction with the layered graphene oxides, and thus, in order to perform complete desorption, the GO adsorbent is maintained until being heated to 160°C. It is shown that the mass of the GO adsorbent is gradually decreased between 100°C and 160°C.

As shown in FIG. 5, it was confirmed, when the GO adsorbent is exposed to heat at 160°C to 200°C, a decrease rate of the mass of the GO adsorbent is gradually increased, and when the GO adsorbent is heated to 200°C or higher, the mass is drastically decreased. Such a drastic weight change indicates that the GO adsorbent is chemically changed. That is, in this temperature range, the functional group in the GO adsorbent surface is separated, and the layered graphene oxides themselves are reduced. From the above results, it was confirmed that the graphene oxide adsorbent of Example 1 contains a certain amount of the interlayer material and can be stably used in a general usage environment.

### (Comparative Example 1)

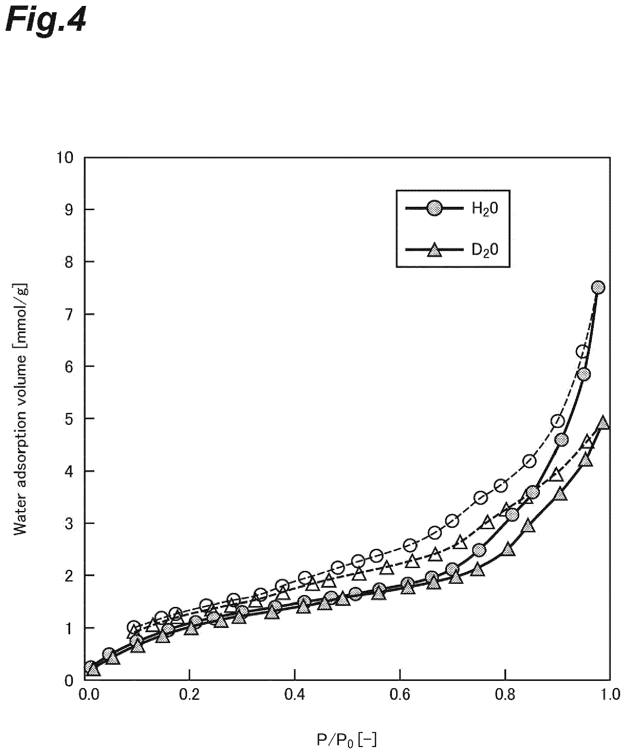

The GO adsorbent of Example 1 was subjected to a heating treatment at 80°C for 120 minutes to obtain a graphene oxide adsorbent. Such an operation corresponds to an operation in which a general drying operation was performed instead of the freeze-drying of Example 1. The adsorption performance of the obtained graphene oxide adsorbent with respect to light water and heavy water was evaluated. Results are shown in FIG. 4.

FIG. 4 shows adsorption isotherms showing adsorption amounts of light water and heavy water after the GO adsorbent of Example 1 is subjected to a heating treatment at 80°C for 120 minutes to be deactivated. The black circle (solid line) indicates an adsorption amount of light water during adsorption, the white circle (broken line) indicates an adsorption amount of light water during desorption, the black triangle (solid line) indicates an adsorption amount of heavy water during adsorption, and the white triangle (broken line) indicates an adsorption amount of heavy water during desorption.

As shown in FIG. 4, it was confirmed that, as for the GO adsorbent which was heated to 80°C to lose a part of light water serving as the interlayer material, the adsorption amount of light water at a saturated vapor pressure was decreased from more than 30 mmol/g in FIG. 3 to less than 8 mmol/g in FIG. 4. Incidentally, as shown in FIG. 4, it is shown that the GO adsorbent subjected to the heating treatment adsorbs light water more than heavy water, and this GO adsorbent has selectivity with respect to light water. However, the reason for this is considered that a part of light water serving as the interlayer material remains in the GO adsorbent.

### (Comparative Example 2)

A graphene oxide dispersion was prepared by using a Modified Hummers' method described below, and this graphene oxide dispersion was dried by heating to obtain a graphene oxide adsorbent.

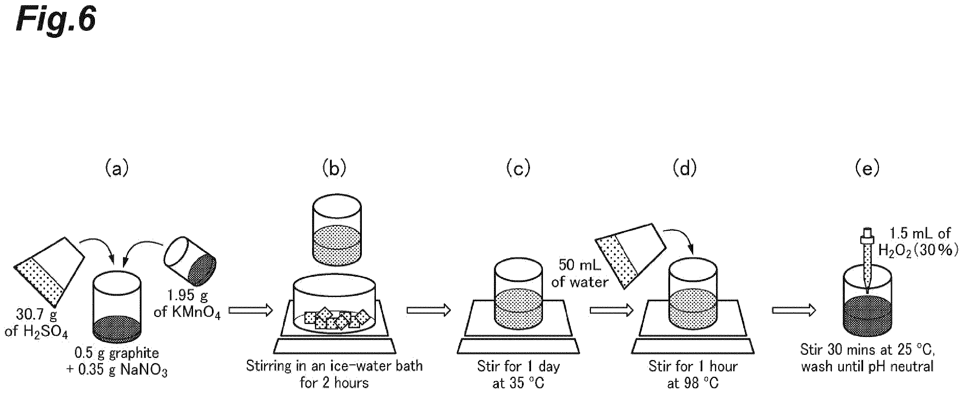

As shown in FIG. 6, in a conventional method (Modified Hummers' method), 0.5 g of graphite powder, 0.35 g of sodium nitrate (NaNO₃) powder, 30.7 g of concentrated sulfuric acid (H₂SO₄, concentration: 97% by mass), and 1.95 g of potassium permanganate powder were weighed in a container to prepare a mixed solution. While the container was brought into contact with ice water (0°C), the mixed solution was stirred for 2 hours. Next, the mixed solution was stirred at 35°C for 1 day.

50 mL of water (H₂O) was added to the mixed solution and stirred at 98°C for 1 hour. Further, 1.5 mL of a hydrogen peroxide solution (H₂O₂, concentration: 30% by mass) was added to the mixed solution and stirred at 25°C for 30 minutes.

Next, the precipitate subjected to ultracentrifugal separation was dissolved in hydrochloric acid and then was further subjected to ultracentrifugal separation. The obtained precipitate was dissolved in pure water and subjected to ultracentrifugal separation, thereby obtaining the precipitate. By repeating the ultracentrifugal separation and the washing with pure water, the liquid property was neutralized, and thereby a dispersed aqueous solution of the layered graphene oxides was obtained. The dispersed aqueous solution was subjected to ultracentrifugal separation, the precipitated part was dried by heating, and thereby a graphene oxide adsorbent was prepared. The same evaluation as in Example 1 was performed for the obtained graphene oxide adsorbent, and thus it was confirmed that the maximum adsorption amount with respect to water vapor was smaller than that of the adsorbent prepared in Comparative Example 1.

### Reference Signs List

2: layered graphene oxide, 4: interlayer material, 10: graphene oxide adsorbent.

## Claims

1. A graphene oxide adsorbent comprising:
a plurality of layered graphene oxides overlapping each other;
an interlayer material disposed between the plurality of layered graphene oxides; and
pores composed of the plurality of layered graphene oxides and the interlayer material.

2. The graphene oxide adsorbent according to claim 1, wherein the interlayer material comprises at least one selected from the group consisting of water, methanol, ethanol, acetone, tetrahydrofuran, dimethylformamide, acetonitrile, dimethylsulfoxide, and hexane.

3. The graphene oxide adsorbent according to claim 1 or 2, wherein an interlayer distance between the layered graphene oxides is 0.335 to 2.50 nm.

4. The graphene oxide adsorbent according to any one of claims 1 to 3, wherein the graphene oxide adsorbent is used for adsorbing the same material as the interlayer material.

5. A method for separating a material, the method comprising:
bringing a gas containing a material serving as an adsorption target and other materials into contact with the graphene oxide adsorbent according to any one of claims 1 to 3 to adsorb the material serving as an adsorption target.

6. A method for producing a graphene oxide adsorbent, the method comprising:
freeze-drying a graphene oxide dispersion, which contains a solvent containing a material serving as an interlayer material and layered graphene oxides, to decrease a content of the solvent, thereby obtaining a graphene oxide adsorbent.

7. The method for producing a graphene oxide adsorbent according to claim 6, wherein the interlayer material comprises at least one selected from the group consisting of water, methanol, ethanol, acetone, tetrahydrofuran, dimethylformamide, acetonitrile, dimethylsulfoxide, and hexane.

8. The method for producing a graphene oxide adsorbent according to claim 6 or 7, wherein the content of the solvent is decreased so that an interlayer distance between the layered graphene oxides becomes 0.335 to 2.50 nm.
